# EUROPEAN PATENT SPECIFICATION

(11) **EP 4 186 377 B1**
(45) Date of publication and mention of the grant of the patent: **23.07.2025**
(21) Application number: 21716585.1
(22) Date of filing: 15.01.2021
(51) Int. Cl.: A23L 13/20, A23L 5/20, A23L 13/40, A23L 27/12, A23L 29/206, A23L 21/25, A23P 30/00, A23P 20/25, A23L 5/10, A23L 29/00

(54) **METHOD FOR MANUFACTURING FOIE GRAS USING DUCK LIVER PRODUCED BY BREEDING THROUGH NON-FORCED FEEDING NOT BY BREEDING IN CAGES, AND FOIE GRAS OF SAME**
VERFAHREN ZUR HERSTELLUNG VON GÄNSELEBERPASTETE UNTER VERWENDUNG VON DURCH ZÜCHTUNG OHNE ZWANGSFÜTTERUNG UND OHNE KÄFIGHALTUNG HERGESTELLTER ENTENLEBER SOWIE GÄNSELEBERPASTETE DARAUS
PROCÉDÉ DE FABRICATION DE FOIE GRAS À L'AIDE DE FOIE DE CANARD PRODUIT EN ÉLEVAGE AVEC UNE ALIMENTATION NON FORCÉE ET NON PAR L'ÉLEVAGE DANS DES CAGES, ET FOIE GRAS ASSOCIÉ

(30) Priority: 22.07.2020 KR 20200090863
(43) Date of publication of application: 31.05.2023
(73) Proprietor: 153 Korea Co., Ltd., Yongin-si, Gyeonggi-do 16926 (KR)
(72) Inventor: SHIN, Dong Wook, Seoul 05647 (KR)
(74) Representative: advotec.
(86) International application number: PCT/KR2021/000612
(87) International publication number: WO 2022/019419

(56) References cited:
- EP-A1- 1 769 688
- WO-A1-2020/096088
- CN-A- 105 475 865
- KR-A- 20140 055 910
- KR-A- 20150 084 360
- KR-A- 20180 122 823
- KR-B1- 100 781 788
- KR-B1- 102 188 776
- THÃ RON L ET AL: "The fusion of lipid droplets is involved in fat loss during cooking of duck foie gras", MEAT SCIENCE, ELSEVIER SCIENCE, GB, vol. 89, no. 4, 18 April 2011 (2011-04-18), pages 377 - 383, XP028277696, ISSN: 0309-1740, [retrieved on 20110512], DOI: 10.1016/J.MEATSCI.2011.04.018

## Description

### [Technical Field]

The present disclosure relates to a method of making foie gras, and more particularly, to a method of making foie gras using duck liver and the foie gras made thereby, the method allowing foie gras to be made using a duck liver produced by raising ducks without force-feeding to provide balanced nutrition and promote health and allowing the foie gras to have a texture that is juicy inside and crispy outside to improve the texture and flavor of the foie

The invention is defined by the appended claims.

### [Background Art]

Foie gras uses goose liver as the main ingredient, but recently, duck liver has been mainly used due to being easier to obtain and cheaper than goose liver. The duck liver is known to contain amino acids, animal protein acting as a catalyst for various chemical reactions within cells, vitamins A and E, etc. in large amounts and thus enhances immunity.

The process of gavage is used to induce the growth of goose liver or duck liver. In the process of gavage, ducks or geese are fed feed and high-protein, high-carbohydrate food for a certain period of time to induce the growth, and then, during the gavage period, in a state in which a tube is pushed down the throat of a goose or duck (by about 5 inches), food is forced into the stomach through the tube every day to force-feed the ducks or geese. This rearing method is controversial in terms of animal cruelty.

Also, duck liver has a tougher texture and a stronger taste and aroma than goose liver. Thus, when duck liver is ingested, an odor and smell may come out from inside the duck liver and cause discomfort and rejection, and the tough texture may degrade the flavor of foie gras. Accordingly, research and development are necessary for a recipe that can be enjoyed by all ages without rejection.

Meanwhile, protein ingested through food is broken down into amino acids, which are the smallest constituents, through digestion and then absorbed into the body and used in organs and tissues in the body. Amino acids are classified into essential amino acids and non-essential amino acids according to whether they can be synthesized in the body. Since essential amino acids are not synthesized in the body or synthesized in insufficient amounts, foods containing essential amino acids should be consumed in order to provide balanced nutrition.

In general, consuming animal protein and plant protein in a ratio of about 3:7 is known to be ideal in terms of a ratio of essential amino acids necessary for the human body. However, foie gras cooked with duck liver as the main ingredient is rich in animal protein but hardly provides plant protein and thus has a limitation in supplying balanced nutrition.

### [Related Art Documents]

### [Patent Documents]

(Patent Document 1) KR 10-2073456 B1 (January 29, 2020)
(Patent Document 2) KR 10-1950903 B1 (February 15, 2019)
(Patent Document 3) KR 10-2018-0122823 A (November 14, 2018)
(Patent Document 4) KR 10-2020-0012290 A (February 5, 2020)

### [Disclosure]

### [Technical Problem]

The present disclosure is directed to providing a method of making foie gras using duck liver produced by raising ducks without force-feeding and the foie gras made thereby, the method allowing foie gras to be made using a duck liver produced by raising ducks without force-feeding to provide balanced nutrition and allowing the foie gras to have a texture that is juicy inside and crispy outside to improve the texture and flavor of the foie gras and allow all ages to enjoy foie gras.

### [Technical Solution]

One aspect of the present disclosure provides a method of making foie gras using duck liver produced by raising ducks without force-feeding, the method including: (a) preparing duck liver, solidified plant-based soy protein, and lard capsules; (b) removing a liver smell from the duck liver; (c) curing the duck liver; (d) adding the duck liver, the solidified plant-based soy protein, butter, whipped cream, honey, additives, and avocado oil into a blender to mix the same and finely grind a mixture thereof; (e) adding some of the ground mixture into a mold; (f) spreading the lard capsules on the mixture added into the mold; (g) repeatedly performing steps (e) and (f) to obtain a stacked mixture, in which the mixture and the lard capsules are sequentially stacked, and initially baking the stacked mixture in an oven to form a mixture lump; and (h) forcibly injecting air into the mixture lump to simultaneously form a void in the mixture lump and expand an exterior of the mixture lump, forcibly injecting the remaining mixture not added into the mold into the void to fill the void, and then baking the mixture lump in the oven to complete making the foie gras.

The preparing of the lard capsules includes: mixing double-boiled lard, which is completely melted in a double boiler, with edible sodium alginate in a ratio of 2:1; mixing water (purified water) and edible calcium lactate in a water tank; and adding the double-boiled lard, which is mixed with the edible sodium alginate in the ratio of 2:1, drop by drop into the water tank, in which the edible calcium lactate is mixed, using a dropper or a syringe to form the lard capsules which are filled with the double-boiled lard and have a thin film formed on a surface thereof due to the water.

Also, step (b) may include: (b-1) immersing the duck liver in a container holding a marinade liquid, in which nutmeg and cardamom, which are spices, are mixed with soju, for about two hours to primarily remove the liver smell; (b-2) washing off the marinade liquid of the primary liver smell removal process from the duck liver and then injecting a liver smell removal liquid into the duck liver to secondarily remove the liver smell; (b-3) cutting the duck liver, into which the liver smell removal liquid is injected, into pieces of predetermined sizes; and (b-4) adding the duck liver cut into pieces of predetermined sizes into a blender containing the liver smell removal liquid and then rotating the blender for one to two minutes to spread the liver smell removal liquid into the duck liver, adding the duck liver cut into pieces of predetermined sizes to double-boiled butter, which is continuously heated at 60 °C after brandy and nutmeg are added thereto, and then slowly boiling the duck liver at a temperature of 80 °C to tertiarily remove the liver smell, wherein step (b-2) may include inserting one end portion of a first tubular body into the duck liver, from which the liver smell is primarily removed, so that the first tubular body penetrates the duck liver, injecting the liver smell removal liquid into the first tubular body through the other end portion of the first tubular body, and injecting air into the other end portion of the first tubular body to inject and spread the liver smell removal liquid, which is added into the first tubular body, into the duck liver, and the first tubular body may have the one end portion formed in the shape of a pointed awl and a plurality of discharge holes formed therein to discharge and spread the liver smell removal liquid, which is injected into the first tubular body, into the duck liver.

Also, step (h) may include: (h-1) inserting one end portion of a second tubular body into the mixture lump so that the second tubular body penetrates the mixture lump and then forcibly injecting air into the second tubular body through the other end portion of the second tubular body to simultaneously form a plurality of voids in the mixture lump and expand the exterior of the mixture lump; (h-2) forcibly injecting the remaining mixture not added into the mold into the second tubular body and then forcibly blowing air into the second tubular body to fill the voids with the mixture; and (h-3) baking the mixture lump in the oven to complete making the foie gras, wherein the second tubular body may have the one end portion formed in the shape of a pointed awl and a plurality of discharge holes formed therein to discharge the ground mixture, which is injected into the second tubular body, into the voids.

Another aspect of the present disclosure provides foie gras made by the method of making foie gras using duck liver produced by raising ducks without force-feeding.

### [Advantageous Effects]

According to the present disclosure, foie gras can be made using a duck liver produced by raising ducks without force-feeding to provide balanced nutrition and promote health, and foie gras can have a texture that is juicy inside and crispy outside to improve the texture and flavor of the foie gras.

Also, according to the present disclosure, the unique odor and smell of duck liver are reliably removed through a total of three liver smell removal processes to allow all ages to enjoy foie gras, and since lard capsules are uniformly distributed in foie gras, when the foie gras is ingested, a rich, nutty flavor of lard spreads in the mouth as the lard capsules burst in the mouth, and thus it is possible to improve a rich nutty flavor and tender texture of foie gras.

### [Description of Drawings]

FIG. 1 is a flowchart illustrating a method of making foie gras according to an embodiment of the present disclosure.
FIG. 2 is a view sequentially illustrating a secondary liver smell removal process according to the present disclosure.
FIG. 3 is a view illustrating a process of expanding an exterior of an initially-baked mixture according to the present disclosure.

### [Modes of the Invention]

In a method of making foie gras according to the present disclosure, duck liver produced by raising ducks without force-feeding is used as an animal protein food source and is mixed with plant-based soy protein extracted from soy(bean), which is a plant protein food source, in an appropriate ratio to provide balanced nutrition that contains animal protein and plant protein. Also, the method is able to effectively remove the unique odor and smell of duck liver and improve the texture and flavor of foie gras.

"Animal protein foods are high in saturated fat and cholesterol. Maintaining a diet with a large proportion of animal protein foods for a long time increases the risk of obesity and hyperlipidemia, cardio-cerebrovascular diseases such as arteriosclerosis, myocardial infarction, and cerebral infarction, and digestive diseases related to the stomach and intestines. Also, animal protein is rich in sulfur-containing amino acids, and many acidic metabolites are produced during the metabolism of animal protein. In order to neutralize the acidic metabolites, the body reacts to dissolve and excrete the calcium accumulated in the bones, and when bone mass continues to decrease, the risk of osteoporosis increases.

On the other hand, unlike animal protein foods, plant protein foods do not contain much cholesterol and are low in saturated fatty acids. Instead, plant protein foods contain sufficient unsaturated fatty acids, including essential fatty acids important for disease prevention and life support activities. Plant protein foods also contain dietary fiber and isoflavone, which is a phytochemical. Therefore, plant protein foods may allow obesity and vascular diseases to be managed through the excretion of serum cholesterol, may facilitate intestinal functions, and may have an anticancer effect, an immunity-boosting effect, and an antioxidant effect. In addition, not containing growth hormones and harmful drugs, such as antibiotics, used in livestock production, which are pointed out as a danger of animal protein foods, has been mentioned as an advantage of plant protein foods." (Refer to Wikipedia)

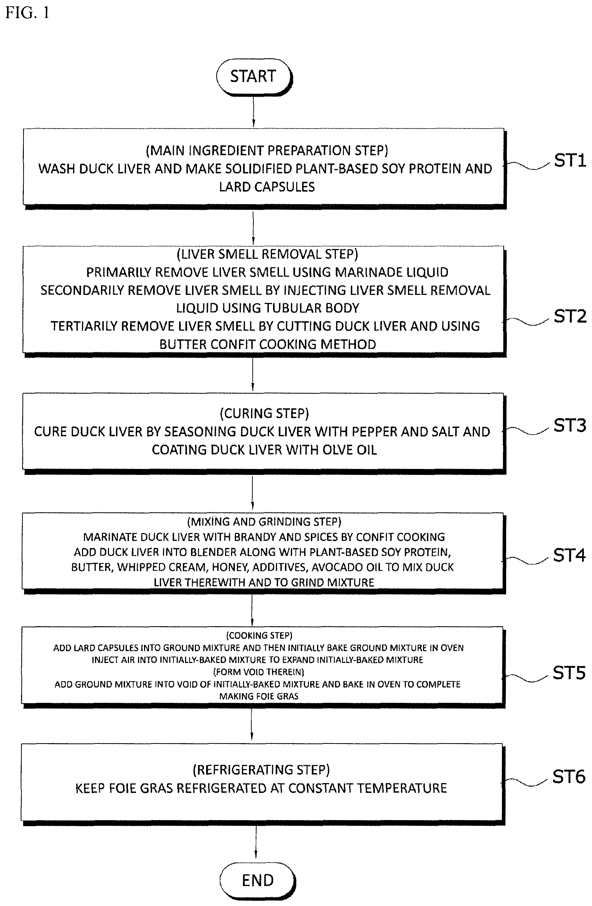

FIG. 1 is a flowchart illustrating a method of making foie gras according to an embodiment of the present disclosure.

Referring to FIG. 1, a method of making foie gras using duck liver produced by raising ducks without force-feeding according to an embodiment of the present disclosure includes a main ingredient preparation step (ST1), a liver smell removal step (ST2), a curing step (ST3), a mixing and grinding step (ST4), a cooking step (ST5), and a refrigerating step (ST6).

### Main ingredient preparation step (ST1)

Duck liver, solidified plant-based soy protein, and lard capsules, which are main ingredients, are prepared.

The duck liver is washed with running water to remove contaminants and secretions therefrom, and plant-based soy protein (isolated soy protein (ISP)) is extracted from soy(bean) and then solidified using a solidifier. At this time, the plant-based soy protein refers to amino acids obtained by breaking down the soy protein.

The lard capsules are prepared using the following method.

First, prepared lard is boiled in a double boiler, the lard completely melted in the double boiler is mixed with edible sodium alginate in a ratio of about 2: 1, and the mixture is kept in a liquid state in the double boiler.

Also, water (purified water) and edible calcium lactate are mixed in a water tank. At this time, a mixing ratio of the water and edible calcium lactate may be 97 to 98 wt% water and 2 to 3 wt% edible calcium lactate.

Then, the double-boiled lard mixed with sodium alginate is added drop by drop into the water tank, in which calcium lactate is mixed, using a tool such as a dropper or a syringe to form the lard capsules which are filled with the double-boiled lard and have a thin film formed on a surface thereof, like frogspawn or caviar.

That is, in the process of forming the lard capsules, when the double-boiled lard mixed with sodium alginate is added drop by drop into the water tank in which calcium lactate is mixed, due to a chemical reaction, calcium ions enter sodium alginate and form a complex chain structure, and accordingly, since water is unable to exit the complex chain structure, a film is formed on a surface of the lard capsules, like frogspawn, and pure lard is kept in a liquid state in the lard capsules.

The lard capsules are added into the duck liver to provide various textures. The lard capsules have a film formed on a surface thereof due to water and are filled with lard in a liquid state.

The process of forming the lard capsules may be shown as [Chemical Equation 1] below.

[Chemical Equation 1] 2(C6H7O6NaOn) + nCaCl2 → [(C6H7O6)2Ca]n + 2nNaCl

(sodium alginate + calcium lactate(calcium chloride) → calcium alginate + sodium chloride)

Sodium alginate is a combination of alginic acid and sodium, and alginic acid is a fiber that constitutes 20 to 30% of seaweed such as sea mustard and has a property of not being dissolved well in water. Like alginic acid of sodium alginate, calcium salt of calcium lactate has a property of being insoluble in water. Therefore, when alginic acid and calcium salt are combined, calcium alginate salt gel is formed.

Then, when the formation of the lard capsules is completed, the lard capsules are soaked in purified water using a spoon with a hole formed therein or the like.

### Liver smell removal step (ST2)

The washed duck liver is immersed in a marinade liquid, in which nutmeg and cardamom, which are spices, are mixed with soju, for about two hours to primarily remove the liver smell.

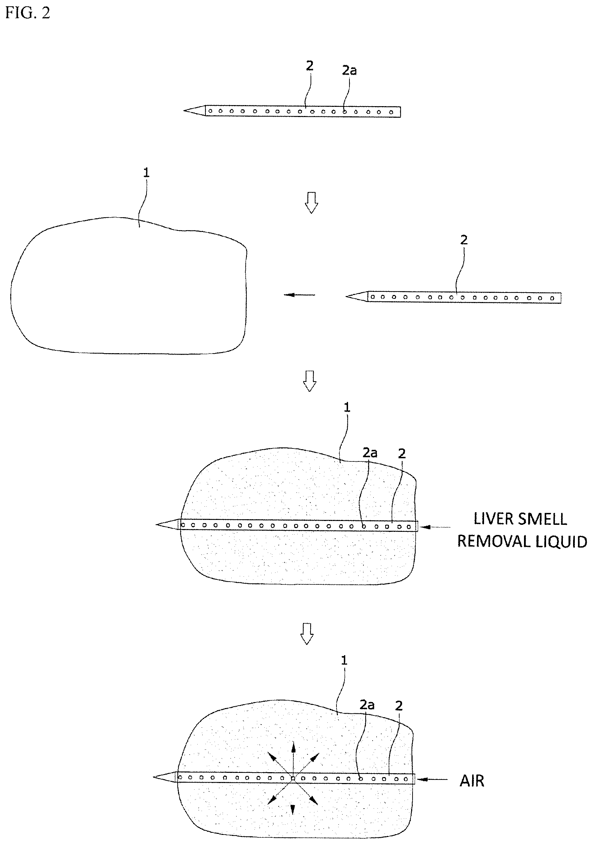

Then, the marinade liquid is washed off from the duck liver, and then a secondary liver smell removal process is performed. The secondary liver smell removal process is performed by injecting a liver smell removal liquid into the duck liver from which the marinade liquid is removed. This will be described below with reference to FIG. 2.

FIG. 2 is a view sequentially illustrating the secondary liver smell removal process according to the present disclosure.

Referring to FIG. 2, a first tubular body 2, which has one end portion formed in the shape of a pointed awl and is filled with a liver smell removal liquid, is prepared. In the first tubular body 2, a plurality of discharge holes 2a are formed at equal intervals to discharge the liver smell removal liquid added into the first tubular body 2 to the outside.

Then, the one end portion of the first tubular body 2 is inserted into a duck liver 1 so that the first tubular body 2 penetrates the duck liver 1, the liver smell removal liquid is injected into the first tubular body 2 through the other end portion thereof which is exposed, and air is injected into the other end portion to inject the liver smell removal liquid, which is added into the first tubular body 2, into the duck liver 1.

At this time, the method of injecting the liver smell removal liquid using the first tubular body 2 may be performed by repeatedly performing a cycle of "inserting the first tubular body 2 → injecting the liver smell removal liquid → injecting air."

Meanwhile, in order to uniformly inject the liver smell removal liquid into the duck liver 1, the first tubular body 2 may be inserted to penetrate at a point of the duck liver 1 where the duck liver 1 is horizontally divided into halves, or steps of injecting an appropriate amount of liver smell removal liquid into the duck liver 1 using the first tubular body 2, withdrawing the first tubular body 2 from the duck liver 1, and then inserting the first tubular body 2 to penetrate another portion of the duck liver 1 may be repeatedly performed.

At this time, the liver smell removal liquid may be made by mixing soju, ground garlic, and citron liquid.

After the injection of the liver smell removal liquid using the first tubular body 2 is completed, the duck liver is cut into pieces of predetermined sizes.

Then, the duck liver cut into pieces is added into a blender (bladeless blender or rotary device) containing the liver smell removal liquid, the blender is rotated for one to two minutes to spread the liver smell removal liquid into the duck liver, the duck liver cut into pieces of predetermined sizes is added to double-boiled butter, which is continuously heated at about 60 °C after brandy and nutmeg are added thereto using a "butter confit" cooking method, and then the duck liver is slowly boiled at a low temperature (for example, 80 °C). In this way, the duck liver is coated with a butter flavor to tertiarily remove the liver smell.

### Curing step (ST3)

After the tertiary liver smell removal process, pepper and salt are added as curing agents to the duck liver so that the duck liver is seasoned therewith, and olive oil is added as a digestive to the duck liver so that the duck liver is coated therewith and prevented from drying out. In this way, protein in the duck liver is broken down such that the texture of the duck liver is softened.

### Mixing and grinding step (ST4)

Brandy and some spices (salt, pepper, etc.) are added to the cured duck liver to marinate the cured duck liver therewith ("confit" cooking) for a predetermined amount of time. Then, the duck liver from which its unique odor is removed is added to a blender along with solidified plant-based soy protein, butter, whipped cream, honey, additives (phosphate/sulfating agent), and avocado oil and is mixed therewith and finely ground.

At this time, the butter and whipped cream soften the texture, and the additives such as a phosphate and a sulfating agent inhibit microbial growth and prevent oxidation. Also, the plant-based soy protein is added for balance with animal protein due to the duck liver. The avocado oil is added to provide a bouncy texture and a rich nutty flavor and is added as unsaturated fat to aid digestion. In addition, coconut oil may be further added to supplement insufficient fat.

### Cooking step (ST5)

The mixture, which is finely ground using the blender in the mixing and grinding step (ST4), is added into a mold (for example, pâté mold). At this time, instead of adding the entire mixture into the mold at one time, a cycle of "adding the mixture → adding the lard capsules → adding the mixture → adding the lard capsules → adding the mixture" is sequentially repeatedly performed. The cycle is performed until 70% of the mold is filled.

Meanwhile, preferably, oil may be applied on an inner side surface of the mold prior to the addition of the mixture into the mold. In this way, foie gras (for example, pâté) may be easily separated from the mold after cooking is completed, and the surface of the foie gras may be prevented from drying out.

Then, after water is poured into an oven pan and heated until it boils (starts to change into steam), the mold is placed thereon to steam-cook using the steam generated when the water in the oven pan boils, and the mixture added into the mold is initially baked using ambient heat in the oven that is at a temperature around 60 °C. At this time, the initial baking is performed for a short time so that only an outer surface of the mixture lump is cooked.

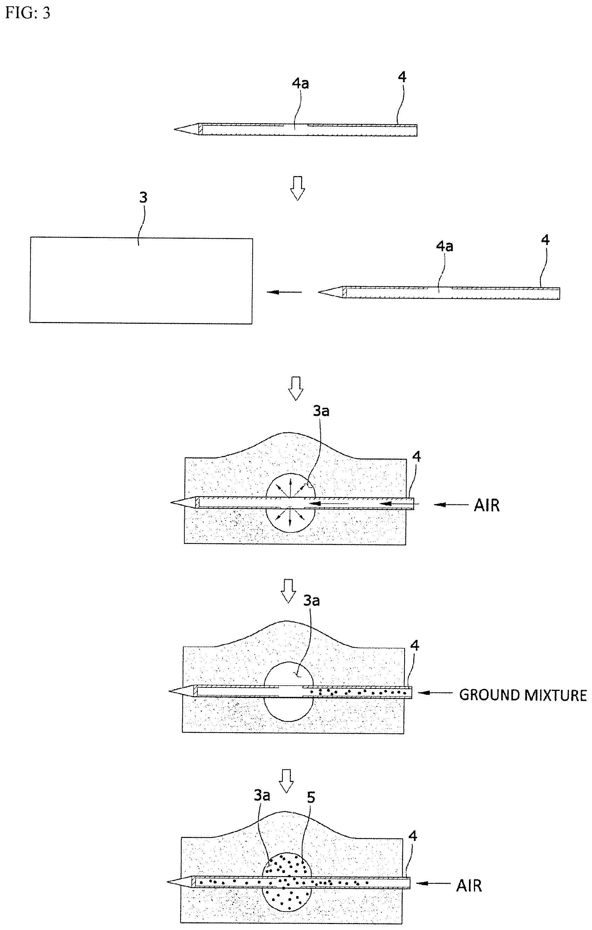

Then, an exterior of the initially-baked mixture lump is expanded. A method thereof is illustrated in FIG. 3.

FIG. 3 is a view illustrating the process of expanding the exterior of the initially-baked mixture according to the present disclosure.

Referring to FIG. 3, the mixture ground in the mixing and grinding step (ST4) may be forcibly injected into an initially-baked mixture lump 3 using a second tubular body 4 so that the initially-baked mixture lump 3 is filled with the mixture. At this time, as the ground mixture that is forcibly injected, the remaining mixture not added into the mold may be used, or a separate mixture which is made through the main ingredient preparation step (ST1), the liver smell removal step (ST2), the curing step (ST3), and/or the mixing and grinding step (ST4) may be used.

Like the first tubular body 2, the second tubular body 4 may allow air or the ground mixture to be added thereinto and may have one end portion formed in the shape of a pointed awl. Also, a plurality of discharge holes 4a are formed at equal intervals in the second tubular body 4 to discharge the air or the ground mixture added into the second tubular body 4. At this time, the discharge hole 4a is formed to have a larger diameter than the discharge hole 2a of the first tubular body 2.

After inserting the one end portion of the second tubular body 4 into the initially-baked mixture lump 3 so that the second tubular body 4 penetrates the initially-baked mixture lump 3, air is forcibly injected into the second tubular body 4 through the other end portion thereof, which is exposed to the outside, to form a void 3a in the initially-baked mixture lump 3. That is, the air injected into the second tubular body 4 is discharged through the discharge hole 4a, the void 3a is formed in the initially-baked mixture lump 3 as a result, and, to correspond thereto, the outer surface of the initially-baked mixture lump 3 expands and protrudes outward such that the overall volume of the initially-baked mixture lump 3 increases.

Then, a ground mixture 5, that is, the remaining mixture not added into the mold, is injected into the second tubular body 4, and air is forcibly blown into the second tubular body 4 to fill the void 3a with the ground mixture 5. Then, the initially-baked mixture lump 3 is cooked for a short time using ambient heat in the oven that is at a temperature around 100 °C in order to complete making the foie gras (pâté).

In this way, in the cooking process according to the present disclosure, the void 3a is formed in the initially-baked mixture lump 3 using the second tubular body 4 and the exterior of the initially-baked mixture lump 3 is expanded so that it is possible to make foie gras having a relatively large size even when a relatively small amount of duck liver is used without growing the duck liver by force-feeding as in the process of gavage.

Also, in the cooking process according to the present disclosure, since the mixture added into the mold is baked by the steam-cooking effect and the ambient heat in the oven, two different textures may be provided. That is, since the outside of the mixture is baked using the ambient heat in the oven and the inside of the mixture is steam-cooked, it is possible to provide a texture that is crispy outside and is juicy and tender inside.

Meanwhile, when the mixture is baked using steam and the ambient heat in the oven, two or three small holes may be formed in the center of the mixture to allow steam inside the mixture to be discharged to the outside while the mixture is being baked. In this way, internal expansion of the mixture is suppressed, and the lard capsules are prevented from expanding and bursting.

### Refrigerating step (ST6)

Foie gras baked in the oven is taken out and stored at a constant refrigeration temperature.

Meanwhile, a mixing ratio (composition ratio) of foie gras according to the present disclosure, which is made using the method of making foie gras according to an embodiment of the present disclosure, may be 30 to 40 wt% duck liver, 40 to 45 wt% plant-based soy protein, 4 to 6 wt% lard capsules, 3 to 5 wt% avocado oil, 4 to 5 wt% butter, 8 to 9 wt% whipped cream, 0.5 to 1 wt% honey, 0.3 to 0.6 wt% salt, 0.2 to 0.3 wt% pepper, 0.1 to 0.2 wt% phosphate, 0.005 to 0.015 wt% antioxidant, 0.4 to 0.5 wt% brandy, and water constituting the rest of the composition.

Preferably, the foie gras according to the present disclosure may consist of 36.41 wt% duck liver, 43.69 wt% plant-based soy protein, 4.79 wt% lard capsules, 3.96 wt% avocado oil, 4.37 wt% butter, 8.95 wt% whipped cream, 0.83 wt% honey, 0.42 wt% salt, 0.21 wt% pepper, 0.12 wt% phosphate, 0.01 wt% antioxidant, 0.42 wt% brandy, and water constituting the rest of the composition.

### Example

Duck liver is washed, plant-based soy protein is extracted from soy and solidified, and lard capsules are made.

A method of making the lard capsules includes first mixing lard, which is completely melted in a double boiler, with edible sodium alginate in a ratio of about 2:1, keeping the mixture in a liquid state in the double boiler, and then mixing water (purified water) and edible calcium lactate in a water tank. Then, the double-boiled lard mixed with sodium alginate is added drop by drop into the water tank, in which calcium lactate is mixed, using a tool such as a dropper or a syringe to form the lard capsules which are filled with the double-boiled lard and have a thin film formed on a surface thereof due to the water, like frogspawn or caviar.

The added amounts of the double-boiled lard and edible sodium alginate and a mixing ratio thereof (wt%) are as shown in [Table 1] below. Also, the added amounts of water (purified water) and edible calcium lactate and a mixing ratio thereof are as shown in [Table 2] below.

**[Table 1]**

| Name of Ingredient | Weight (g) | Mixing ratio (wt%) |
|---|---|---|
| Lard | 50 | 66.7% |
| Edible sodium alginate | 25 | 33.3% |
| | 75 | 100.0% |

**[Table 2]**

| Name of Ingredient | Weight (g) | Mixing ratio (wt%) |
|---|---|---|
| Water (purified water) | 400 | 97.6% |
| Edible calcium lactate | 10 | 2.4% |
| | 410 | 100.0% |

Then, some spices are added to the duck liver to marinate the duck liver therewith for a predetermined amount of time, and then the duck liver is added to a blender along with the solidified plant-based soy protein, butter, whipped cream, honey, additives (phosphate/sulfating agent), and avocado oil and is mixed therewith and finely ground. At this time, the added amounts (g) of the components of the mixture that are added to the blender during the mixing and grinding and a mixing ratio (wt%) thereof are as shown in [Table 3] below.

**[Table 3]**

| Name of Ingredient | Weight (g) | Mixing ratio (wt%) |
|---|---|---|
| Duck liver | 175 | 36.41 |
| Plant-based soy protein | 210 | 43.69 |
| Lard capsules | 23 | 4.79 |
| Avocado oil | 17 | 3.96 |
| Butter | 21 | 4.37 |
| Whipped cream | 43 | 8.95 |
| Honey | 4 | 0.83 |
| Salt | 2 | 0.42 |
| Pepper | 1 | 0.21 |
| Phosphate | 0.6 | 0.12 |
| Sulfating agent | 0.06 | 0.01 |
| Brandy | 2 | 0.42 |
| Water | - | When the total mixing ratio is less than 100 wt%, water is added as the remainder |

In [Table 3] above, the lard capsules are added in a subsequent cooking process.

Then, the mixture finely ground using the blender in the mixing and grinding step is added into a foie gras mold. At this time, instead of adding the entire mixture into the foie gras mold at one time, a cycle of "adding the mixture → adding the lard capsules → adding the mixture → adding the lard capsules → adding the mixture" is sequentially repeatedly performed. The cycle is performed until 70% of the mold is filled.

Then, after water is poured into an oven pan and heated until it boils (starts to change into steam), the foie gras mold is placed thereon to steam-cook using the steam generated when the water in the oven pan boils, and the mixture added into the foie gras mold is initially baked using ambient heat in the oven that is at a temperature around 60 °C.

Then, an exterior of the initially-baked mixture lump is expanded, the ground mixture is added into the initially-baked mixture lump, and then the initially-baked mixture lump is baked using ambient heat in the oven that is at a temperature around 100 °C in order to complete making the foie gras (pâté).

Then, the foie gras baked in the oven is taken out and stored at a constant refrigeration temperature.

### Comparative Example 1

Foie gras (pâté) was made using the same method as in the example except that the lard capsules were not used.

### Comparative Example 2

Foie gras was made using the same method as in the example except that the primary to tertiary liver smell removal processes were omitted.

### Sensory evaluation

The foie gras made according to the example and the comparative examples was given to and tasted by a panel of ten adults, a sensory evaluation was performed by the panel of ten adults based on a scale of 9 points and average values were obtained, and resulting values thereof are shown in [Table 4] below.
- Unique odor and smell (off-smell): 1 point=very strong, 9 points= none
- Rich nutty flavor and texture (tenderness): 1 point=very dry, 9 points= flavor is rich and nutty and texture is very tender
- Overall preference: 1 point = very low, 9 points=very high

**[Table 4]**

| | Unique odor and smell | Texture (tenderness) | Overall preference |
|---|---|---|---|
| Example | 8.80 | 8.60 | 8.70 |
| Comparative Example 1 | 8.70 | 7.30 | 8.00 |
| Comparative Example 2 | 7.10 | 8.40 | 7.75 |

As in [Table 4] above, the foie gras made using the method of making foie gras according to the example of the present disclosure was superior in terms of unique odor and smell, texture (tenderness), and overall preference, as compared to Comparative Example 1 and Comparative Example 2. In particular, in the method of making foie gras according to the example of the present disclosure, since duck liver and plant-based soy protein, which are the main ingredients, are mixed in an appropriate ratio to make foie gras, balanced nutrition including animal protein and plant protein may be provided to promote health, and the foie gras may be made to have a texture that is juicy inside and crispy outside to improve the texture and flavor of the foie gras.

Also, in the method of making foie gras according to the example of the present disclosure, since the unique odor and smell of duck liver are removed through the primary to tertiary liver smell removal processes, the foie gras may be enjoyed by all ages. Also, since lard capsules are uniformly distributed in the foie gras, when the foie gras is chewed, a rich, nutty flavor of lard spreads in the mouth as the lard capsules burst in the mouth, and thus the rich nutty flavor and tender texture of the foie gras are improved.

### [Description of Reference Numerals]

1: duck liver
2: first tubular body
2a: discharge hole
3: mixture lump
4: second tubular body
4a: discharge hole
5: ground mixture

## Claims

1. A method of making foie gras using duck liver produced by raising ducks without force-feeding, the method comprising:
(a) preparing duck liver, solidified plant-based soy protein, and lard capsules;
(b) removing a liver smell from the duck liver;
(c) curing the duck liver;
(d) adding the duck liver, the solidified plant-based soy protein, butter, whipped cream, honey, additives, and avocado oil into a blender to mix the same and finely grind a mixture thereof;
(e) adding some of the ground mixture into a mold;
(f) spreading the lard capsules on the mixture added into the mold;
(g) repeatedly performing steps (e) and (f) to obtain a stacked mixture, in which the mixture and the lard capsules are sequentially stacked, and initially baking the stacked mixture in an oven to form a mixture lump; and
(h) forcibly injecting air into the mixture lump to simultaneously form a void in the mixture lump and expand an exterior of the mixture lump, forcibly injecting the remaining mixture not added into the mold into the void to fill the void, and then baking the mixture lump in the oven to complete making the foie gras,
wherein the preparing of the lard capsules includes:
mixing double-boiled lard, which is completely melted in a double boiler, with edible sodium alginate in a ratio of 2:1;
mixing water (purified water) and edible calcium lactate in a water tank; and
adding the double-boiled lard, which is mixed with the edible sodium alginate in the ratio of 2:1, drop by drop into the water tank, in which the edible calcium lactate is mixed, using a dropper or a syringe to form the lard capsules which are filled with the double-boiled lard and have a thin film formed on a surface thereof due to the water;
wherein the solidified plant-based soy protein is plant-based soy protein, which is extracted from soy(bean) and then solidified using a solidifier, wherein the plant-based soy protein refers to amino acids obtained by breaking down the soy protein.

2. The method of claim 1, wherein step (b) includes:
(b-1) immersing the duck liver in a container holding a marinade liquid, in which nutmeg and cardamom, which are spices, are mixed with soju, for about two hours to primarily remove the liver smell;
(b-2) washing off the marinade liquid of the primary liver smell removal process from the duck liver and then injecting a liver smell removal liquid into the duck liver to secondarily remove the liver smell;
(b-3) cutting the duck liver, into which the liver smell removal liquid is injected, into pieces of predetermined sizes; and
(b-4) adding the duck liver cut into pieces of predetermined sizes into a blender containing the liver smell removal liquid and then rotating the blender for one to two minutes to spread the liver smell removal liquid into the duck liver, adding the duck liver cut into pieces of predetermined sizes to double-boiled butter, which is continuously heated at 60 °C after brandy and nutmeg are added thereto, and then slowly boiling the duck liver at a temperature of 80 °C to tertiarily remove the liver smell,
wherein step (b-2) includes:
inserting one end portion of a first tubular body into the duck liver, from which the liver smell is primarily removed, so that the first tubular body penetrates the duck liver;
injecting the liver smell removal liquid into the first tubular body through the other end portion of the first tubular body; and
injecting air into the other end portion of the first tubular body to inject and spread the liver smell removal liquid, which is added into the first tubular body, into the duck liver,
wherein the first tubular body has the one end portion formed in the shape of a pointed awl and a plurality of discharge holes formed therein to discharge and spread the liver smell removal liquid, which is injected into the first tubular body, into the duck liver.

3. The method of claim 1, wherein step (h) includes:
(h-1) inserting one end portion of a second tubular body into the mixture lump so that the second tubular body penetrates the mixture lump and then forcibly injecting air into the second tubular body through the other end portion of the second tubular body to simultaneously form a plurality of voids in the mixture lump and expand the exterior of the mixture lump;
(h-2) forcibly injecting the remaining mixture not added into the mold into the second tubular body and then forcibly blowing air into the second tubular body to fill the voids with the mixture; and
(h-3) baking the mixture lump in the oven to complete making the foie gras,
wherein the second tubular body has the one end portion formed in the shape of a pointed awl and a plurality of discharge holes formed therein to discharge the ground mixture, which is injected into the second tubular body, into the voids.

4. A foie gras made by the method of making foie gras using duck liver produced by raising ducks without force-feeding of any one of claims 1 to 3.

## Patentansprüche

1. Verfahren zur Herstellung von Stopfleber unter Verwendung von Entenleber, die durch Züchten von Enten ohne Zwangsfütterung hergestellt wird, wobei das Verfahren folgende Schritte umfasst:
(a) Herstellen von Entenleber, gefestigtem Sojaprotein auf Pflanzenbasis und Schmalzkapseln;
(b) Entfernen eines Lebergeruchs aus der Entenleber;
(c) Pökeln der Entenleber;
(d) Zugeben der Entenleber, des gefestigten Sojaproteins auf Pflanzenbasis, von Butter, Schlagsahne, Honig, Zusatzstoffen und Avocadoöl in einen Mischer, um selbige zu mischen und ein Gemisch daraus fein zu mahlen;
(e) Zugeben von etwas von dem gemahlenen Gemisch in eine Form;
(f) Verteilen der Schmalzkapseln auf dem in die Form zugegebenen Gemisch;
(g) wiederholtes Durchführen der Schritte (e) und (f), um ein geschichtetes Gemisch zu erhalten, in dem das Gemisch und die Schmalzkapseln aufeinanderfolgend geschichtet werden, und anfängliches Braten des geschichteten Gemischs in einem Ofen, um eine Gemischmasse zu bilden; und
(h) gewaltsames Einspritzen von Luft in die Gemischmasse, um gleichzeitig einen Hohlraum in der Gemischmasse zu bilden und ein Äußeres der Gemischmasse auszudehnen, gewaltsames Einspritzen des nicht in die Form zugegebenen restlichen Gemischs in den Hohlraum, um den Hohlraum zu füllen, und dann Braten der Gemischmasse im Ofen, um das Herstellen der Stopfleber zu vollenden,
wobei das Herstellen der Schmalzkapseln folgende Schritte umfasst:
Mischen von vollständig in einem Wasserbad geschmolzenem Schmalz mit essbarem Natriumalginat in einem Verhältnis von 2 : 1;
Mischen von Wasser (gereinigtem Wasser) und essbarem Calciumlactat in einem Wasserbehälter; und
Zugeben des mit dem essbaren Natriumalginat in dem Verhältnis von 2 : 1 gemischten, im Wasserbad geschmolzenen Schmalzes Tropfen für Tropfen in den Wasserbehälter, in dem das essbare Calciumlactat gemischt wird, unter Verwendung einer Pipette oder einer Spritze, um die Schmalzkapseln zu bilden, die mit dem im Wasserbad geschmolzenen Schmalz gefüllt sind und einen dünnen Film aufweisen, der aufgrund des Wassers auf einer Oberfläche davon gebildet wird;
wobei das gefestigte Sojaprotein auf Pflanzenbasis ein Sojaprotein auf Pflanzenbasis ist, das aus Soja(bohnen) extrahiert wird und dann unter Verwendung eines Festigers gefestigt wird, wobei das Sojaprotein auf Pflanzenbasis sich auf Aminosäuren bezieht, die durch das Aufspalten des Sojaproteins erhalten werden.

2. Verfahren nach Anspruch 1, wobei Schritt (b) folgende Schritte umfasst:
(b-1) Tauchen der Entenleber in einen Behälter, der eine Marinadeflüssigkeit, in der Muskatnuss und Kardamom, welche Gewürze sind, mit Soju gemischt sind, enthält, für ungefähr zwei Stunden, um primär den Lebergeruch zu entfernen;
(b-2) Abwaschen der Marinadeflüssigkeit des primären Lebergeruchentfernungsprozesses von der Entenleber und dann Einspritzen einer Lebergeruchentfernungsflüssigkeit in die Entenleber, um sekundär den Lebergeruch zu entfernen;
(b-3) Schneiden der Entenleber, in die die Lebergeruchentfernungsflüssigkeit eingespritzt ist, in Stücke von vorbestimmten Größen; und
(b-4) Zugeben der in Stücke von vorbestimmten Größen geschnittenen Entenleber in einen Mischer, der die Lebergeruchentfernungsflüssigkeit enthält, und dann Drehen des Mischers für ein bis zwei Minuten, um die Lebergeruchentfernungsflüssigkeit in der Entenleber zu verteilen, Zugeben der in Stücke von vorbestimmten Größen geschnittenen Entenleber zu in einem Wasserbad geschmolzener Butter, die kontinuierlich bei 60°C erhitzt wird, nachdem Brandy und Muskatnuss dazu zugegeben wurden, und dann langsames Kochen der Entenleber bei einer Temperatur von 80°C, um tertiär den Lebergeruch zu entfernern,
wobei Schritt (b-2) folgende Schritte umfasst:
Einführen eines Endabschnitts eines ersten rohrförmigen Körpers in die Entenleber, aus der der Lebergeruch primär entfernt ist, so dass der erste rohrförmige Körper die Entenleber durchdringt;
Einspritzen der Lebergeruchentfernungsflüssigkeit in den ersten rohrförmigen Körper durch den anderen Endabschnitt des ersten rohrförmigen Körpers; und
Einspritzen von Luft in den anderen Endabschnitt des ersten rohrförmigen Körpers, um die Lebergeruchentfernungsflüssigkeit, die in den ersten rohrförmigen Körper zugegeben ist, in die Entenleber einzuspritzen und in ihr zu verteilen,
wobei der erste rohrförmige Körper den einen Endabschnitt, der in der Form einer spitzen Ahle ausgebildet ist, und eine Vielzahl von darin gebildeten Ausströmlöchern aufweist zum Ausströmen und Verteilen der Lebergeruchentfernungsflüssigkeit, die in den ersten rohrförmigen Körper eingespritzt wird, in die/der Entenleber.

3. Verfahren nach Anspruch 1, wobei Schritt (h) folgende Schritte umfasst:
(h-1) Einführen eines Endabschnitts eines zweiten rohrförmigen Körpers in die Gemischmasse, derart, dass der zweite rohrförmige Körper die Gemischmasse durchdringt, und dann gewaltsames Einspritzen von Luft in den zweiten rohrförmigen Körper durch den anderen Endabschnitt des zweiten rohrförmigen Körpers, um gleichzeitig eine Vielzahl von Hohlräumen in der Gemischmasse zu bilden und das Äußere der Gemischmasse auszudehnen;
(h-2) gewaltsames Einspritzen des nicht in die Form zugegebenen restlichen Gemischs in den zweiten rohrförmigen Körper und dann gewaltsames Hineinblasen von Luft in den zweiten rohrförmigen Körper, um die Hohlräume mit dem Gemisch zu füllen, und
(h-3) Braten der Gemischmasse im Ofen, um das Herstellen der Stopfleber zu vollenden,
wobei der zweite rohrförmige Körper den einen Endabschnitt, der in der Form einer spitzen Ahle ausgebildet ist, und eine Vielzahl von darin gebildeten Ausströmlöchern aufweist zum Ausströmen des gemahlenen Gemischs, das in den zweiten rohrförmigen Körper eingespritzt wird, in die Hohlräume.

4. Stopfleber, die durch das Verfahren zur Herstellung von Stopfleber unter Verwendung von Entenleber, die durch Züchten von Enten ohne Zwangsfütterung hergestellt wird, nach einem der Ansprüche 1 bis 3 hergestellt wird.

## Revendications

1. Procédé de fabrication de foie gras utilisant du foie de canard produit en élevant des canards sans gavage, le procédé comprenant les étapes suivantes :
(a) préparer du foie de canard, de la protéine de soja solidifiée à base de plantes et des capsules de saindoux ;
(b) éliminer une odeur de foie du foie de canard ;
(c) saler le foie de canard ;
(d) ajouter du foie de canard, de la protéine de soja solidifiée à base de plantes, du beurre, de la crème fouettée, du miel, des additifs et de l'huile d'avocat dans un mélangeur pour les mélanger et moudre finement un mélange de ceux-ci ;
(e) ajouter une partie du mélange moulu dans une moule ;
(f) répartir les capsules de saindoux sur le mélange ajouté dans le moule ;
(g) effectuer de manière répétée les étapes (e) et (f) pour obtenir un mélange empilé dans lequel le mélange et les capsules de saindoux sont empilés séquentiellement, et cuire initialement le mélange empilé dans un four pour former une masse de mélange ; et
(h) injecter de force de l'air dans la masse de mélange pour former simultanément un creux dans la masse de mélange et étendre un extérieur de la masse de mélange, injecter de force le mélange restant, qui n'est pas ajouté dans le moule, dans le creux pour remplir le creux, et, ensuite, cuire la masse de mélange dans le four pour compléter la fabrication du foie gras,
dans lequel l'étape consistant à préparer les capsules de saindoux comprend les étapes suivantes :
mélanger du saindoux complètement fondu dans un bain marie avec de l'alginate de sodium mangeable dans un rapport de 2 : 1 ;
mélanger de l'eau (de l'eau purifiée) et du lactate de calcium mangeable dans un réservoir d'eau ; et
ajouter le saindoux fondu au bain-marie, qui est mélangé avec de l'alginate de sodium mangeable dans un rapport de 2 : 1, goutte à goutte dans le réservoir d'eau dans lequel le lactate de calcium mangeable est mélangé en utilisant un compte-gouttes ou une seringue pour former des capsules de saindoux qui sont remplies du saindoux fondu au bain-marie et ont un film mince formé sur une surface de celui-ci en raison de l'eau ;
dans lequel la protéine de soja solidifiée à base de plantes est une protéine de soja à base de plantes qui est extraite d'un(e) (fève de) soja et, ensuite, solidifiée en utilisant un solidifiant, dans lequel la protéine de soja à base de plantes se réfère à des acides aminés obtenus en décomposant la protéine de soja.

2. Procédé selon la revendication 1, dans lequel l'étape (b) comprend les étapes suivantes :
(b-1) immerger le foie de canard pendant environ deux heures dans un récipient contenant un liquide de marinade dans lequel de la muscade et de la cardamome, qui sont des épices, sont mélangées avec du soju pour éliminer en premier lieu l'odeur de foie ;
(b-2) laver le liquide de marinade du processus primaire d'élimination d'odeur de foie du foie de canard et, ensuite, injecter un liquide d'élimination d'odeur de foie dans le foie de canard pour éliminer secondairement l'odeur de foie ;
(b-3) couper le foie de canard dans lequel le liquide d'élimination d'odeur de foie est injecté en morceaux de tailles prédéterminées ; et
(b-4) ajouter le foie de canard coupé en morceaux de tailles prédéterminées dans un mélangeur contenant le liquide d'élimination d'odeur de foie et, ensuite, faire tourner le mélangeur pendant une à deux minutes pour répartir le liquide d'élimination d'odeur de foie dans le foie de canard, ajouter le foie de canard coupé en morceaux de tailles prédéterminées à du beurre fondu au bain-marie qui est chauffé en continu à 60 °C après que du brandy et de la muscade ont été ajoutés à celui-ci et, ensuite, cuire lentement le foie de canard à une température de 80 °C pour éliminer de manière tertiaire l'odeur de foie,
dans lequel l'étape (b-2) comprend les étapes suivantes :
insérer une partie d'extrémité d'un premier corps tubulaire dans le foie de canard duquel l'odeur de foie est éliminé en premier lieu de manière que le premier corps tubulaire pénètre le foie de canard ;
injecter le liquide d'élimination d'odeur de foie dans le premier corps tubulaire à travers l'autre partie d'extrémité du premier corps tubulaire ; et
injecter de l'air dans l'autre partie d'extrémité du premier corps tubulaire pour injecter et répartir le liquide d'élimination d'odeur de foie, qui est ajouté dans le premier corps tubulaire, dans le foie de canard,
dans lequel le premier corps tubulaire a l'une partie d'extrémité formée dans la forme d'une alêne pointue et une pluralité de trous de décharge formée dans celle-ci pour décharger et répartir le liquide d'élimination d'odeur de foie, qui est injecté dans le premier corps tubulaire, dans le foie de canard.

3. Procédé selon la revendication 1, dans lequel l'étape (h) comprend les étapes suivantes :
(h-1) insérer une partie d'extrémité d'un deuxième corps tubulaire dans la masse de mélange de manière que le deuxième corps tubulaire pénètre la masse de mélange et, ensuite, injecter de force de l'air dans le deuxième corps tubulaire á travers l'autre partie d'extrémité du deuxième corps tubulaire pour former simultanément une pluralité de creux dans la masse de mélange et étendre l'extérieur de la masse de mélange
(h-2) injecter de force le mélange restant, qui n'est pas ajouté dans le moule, dans le deuxième corps tubulaire et, ensuite, insuffler de force de l'air dans le deuxième corps tubulaire pour remplir les creux avec le mélange ; et
(h-3) cuire la masse de mélange dans le four pour compléter la fabrication du foie gras,
dans lequel le deuxième corps tubulaire a l'une partie d'extrémité formée dans la forme d'une alêne pointue et une pluralité de trous de décharge formée dans celle-ci pour décharger le mélange moulu, qui est injecté dans le deuxième corps tubulaire, dans les creux.

4. Foie gras fabriqué par le procédé de fabrication de foie gras utilisant du foie de canard produit en élevant des canards sans gavage selon l'une quelconque des revendications 1 à 3.
